# EUROPEAN PATENT APPLICATION

(11) **EP 4 613 618 A1**
(43) Date of publication of application: **10.09.2025**
(21) Application number: 24219373.8
(22) Date of filing: 12.12.2024
(51) Int. Cl.: B62K 5/08, B62K 5/10

(54) **HORIZONTAL STABILIZATION STRUCTURE**

(30) Priority: 05.03.2024 TW 113107952
(71) Applicant: REXON INDUSTRIAL CORP., LTD., Taichung City (TW)
(72) Inventor: CHANG, Yao-Jen, 412 Taichung City (TW); LIANG, Zih-Wei, 412 Taichung City (TW)
(74) Representative: Viering, Jentschura & Partner mbB Patent- und Rechtsanwälte

(57) **Abstract**

A horizontal stabilization structure (100) which is applied to a cargo bike (200) having a direction controlling device (210), a tilting device (220), and a carriage device (230), includes a first connecting rod (10) and a second connecting rod (20). The first connecting rod (10) has a first connecting end (11) and a second connecting end (12). The first connecting end (11) is connected with an upper tilting rod (220a) of the tilting device (220). The second connecting end (12) has a first combining part (121) and a second combining part (122) protruding toward a lateral side. The first combining part (121) is connected with a lower tilting rod (220b) of the tilting device (220). The second connecting rod (20) has a third connecting end (21) connected with the second combining part (122) and a fourth connecting end (22) connected with the carriage device (230). When the direction controlling device (210) controls the tilting device (220) to tilt, the horizontal stabilization structure (100) keeps the carriage device (230) level.

## Description

### BAC KG RO UND OF THE APPLICATION

### 1. Field of the Application:

The present application relates to stabilization structures, and more particularly, to a horizontal stabilization structure applied to a cargo bike.

### 2. Description of the Related Art:

Cargo bikes have been developed for many years around the world. Especially in Europe and the United States, due to the large space provided by the racks or baskets installed on cargo bikes, they are used for carrying larger items and heavier loads. Thus, cargo bikes have become one of the most commonly used transportation vehicles for carrying people or goods.

However, regarding conventional cargo bikes, the racks or baskets are often connected to the turning device of the wheels. which leads to the problem that when the rider performs a turning operation, the rack or basket tilts along with the body of the bike. As a result, the items on the rack or in the basket easily collide and get damaged due to the tilting. Moreover, the items may even fall off the rack or out of the basket because of the tilting condition.

### SUMMARY OF THE APPLICATION

The present application aims at resolving the issues of the goods held in the cargo bike being easily colliding and getting damaged or falling off the rack or out of the basket because of the tilting condition.

For achieving the aforementioned objectives, an embodiment of the present application provides a horizontal stabilization structure, which is applied to a cargo bike having a direction controlling device, a tilting device, and a carriage device, the horizontal stabilization structure comprising:
a first connecting rod having a first connecting end and a second connecting end, the first connecting end connected with an upper tilting rod of the tilting device, the second connecting end comprising a first combining part and a second combining part protruding toward a lateral side, the first combining part connected with a lower tilting rod of the tilting device; and
a second connecting rod having a third connecting end and a fourth connecting end, the third connecting end connected with the second combining part, the fourth connecting end connected with the carriage device;
wherein when the direction controlling device controls the tilting device to be in a tilting status, the horizontal stabilization structure keeps the carriage device level with respect to the ground.

In another embodiment of the present application, two horizonal stabilization structures are included and symmetrically disposed on two opposite sides of the tilting device.

In another embodiment of the present application, the two horizontal stabilization structures are disposed on the same side with respect to the carriage device.

In another embodiment of the present application, the first connecting end has a first connecting hole, and the upper tilting rod has a second connecting hole corresponding to the first connecting hole, with a first connecting member passing through the first connecting hole and the second connecting hole.

In another embodiment of the present application, the first combining part has a third connecting hole, and the lower tilting rod has a fourth connecting hole corresponding to the third connecting hole, with a second connecting member passing through the third connecting hole and the fourth connecting hole.

In another embodiment of the present application, the second combining part has a fifth connecting hole, and the third connecting end has a sixth connecting hole corresponding to the fifth connecting hole, with a third connecting member passing through the fifth connecting hole and the sixth connecting hole.

In another embodiment of the present application, the carriage device has a transverse carriage rod, the transverse carriage rod has a seventh connecting hole, and the fourth connecting end has an eighth connecting hole corresponding to the seventh connecting hole, with a fourth connecting member passing through the seventh connecting hole and the eighth connecting hole.

With such configuration, when a user operates the direction controlling device to control the tilting device to enter the tilting status, the horizontal stabilization structure keeps the carriage device level with respect to the ground, preventing the goods in a carriage member from being damaged due to excessive shaking or falling out of the carriage member.

Also, when a child or a pet is in the carriage member, the horizontal stabilization structure keeps the carriage member level with respect to the ground while the cargo bike is moving, so as to ensure that the child or the pet sits more steadily in the carriage member, reducing the possibility of motion sickness or potential danger.

### BRIEF DESCRIPTION OF THE DRAWINGS

**Fig. 1** is a perspective view of the cargo bike in accordance with an embodiment of the present application, illustrating the arrangement position of the horizontal stabilization structure.
**Fig. 2** is a partial perspective view of the cargo bike in accordance with an embodiment of the present application, illustrating the arrange position of the horizontal stabilization structure on the tilting device and the carriage device.
**Fig. 3** is an exploded view of the horizontal stabilization structure in accordance with an embodiment of the present application.
**Fig. 4** is a schematic front view of the cargo bike in accordance with an embodiment of the present application, illustrating the operation status of the horizontal stabilization structure when the tilting device is not tilting.
**Fig. 5** is a schematic front view of the cargo bike in accordance with an embodiment of the present application, illustrating the operation status of the horizontal stabilization structure when the tilting device is tilting.

### DETAILED DESCRIPTION OF THE APPLICATION

The aforementioned and further advantages and features of the present application will be understood by reference to the description of the preferred embodiment in conjunction with the accompanying drawings where the components are illustrated based on a proportion for explanation but not subject to the actual component proportion.

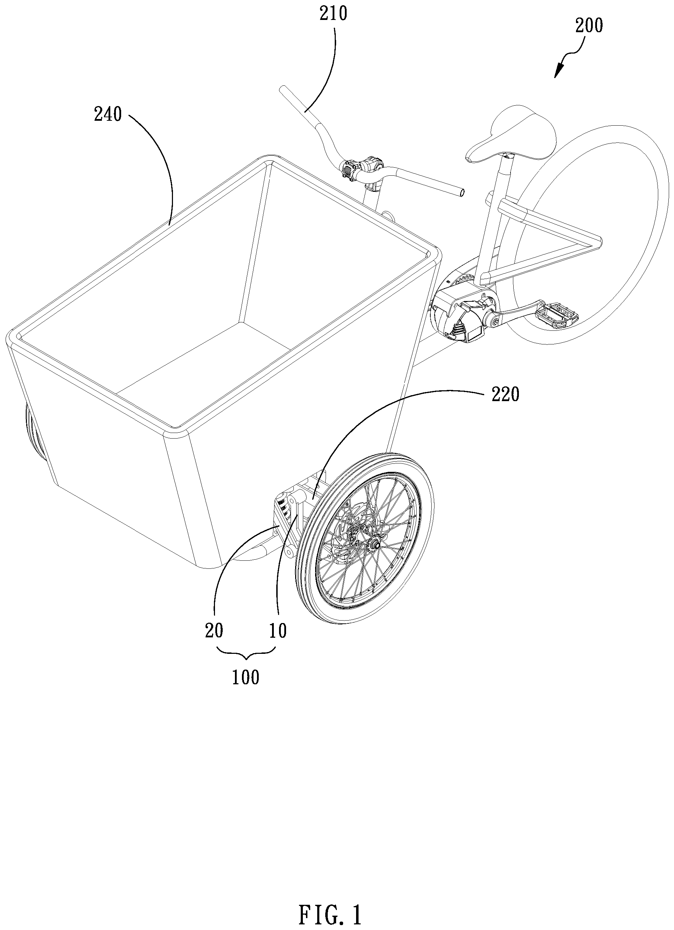

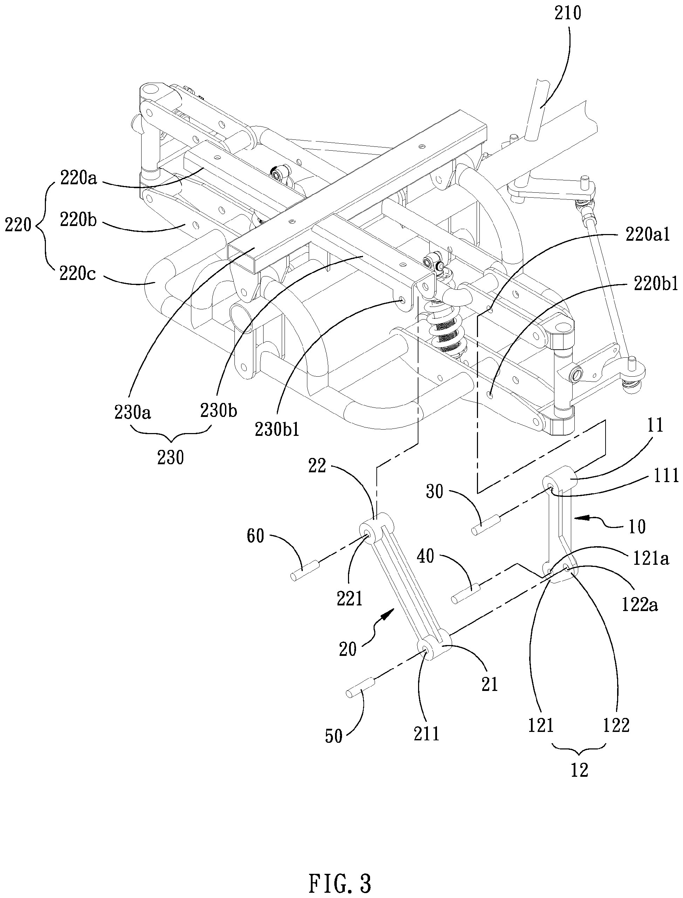

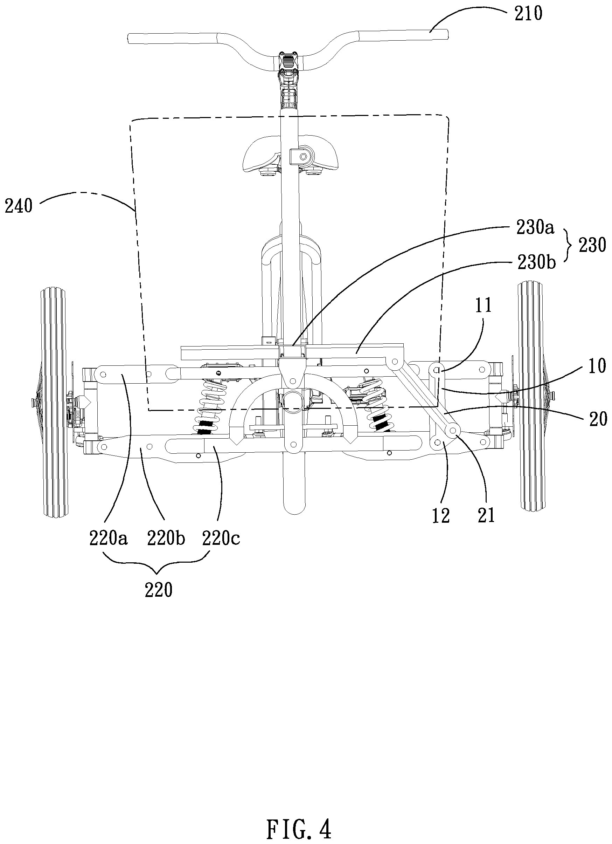

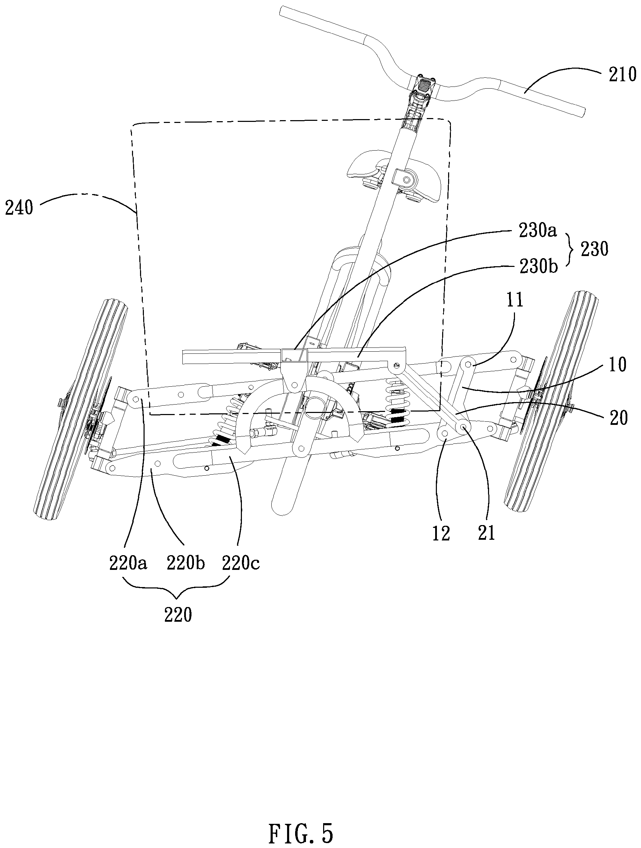

Referring to **Fig. 1** to **Fig. 5****,** the present application provides a horizontal stabilization structure **100,** which is applied to a cargo bike **200.** The horizontal stabilization structure **100** comprises a first connecting rod **10** and a second connecting rod **20.** Therein, the cargo bike **200** comprises a direction controlling device **210,** a tilting device **220,** and a carriage device **230.** The tilting device **220** is connected with the direction controlling device **210,** so that when a user controls the direction controlling device **210** to carry out a turning operation, the tilting device **220** correspondingly tilts to facilitate a smooth turning of the cargo bike **200.** The carriage device **230** is disposed in front of the direction controlling device **210** and connected with the tilting device **220** for fixing a carriage member **240** used for carrying goods.

Referring to **Fig. 1** to **Fig. 2****,** in the embodiment, the tilting device **220** comprises an upper tilting rod **220a,** a lower tilting rod **220b,** and a tilting connecting member **220c.** The carriage device **230** comprises a longitudinal carriage rod **230a** and a transverse carriage rod **230b.** The longitudinal carriage rod **230** has two ends thereof pivotally connected to the tilting connecting member **220c.** Therefore, when the tilting device **220** tilts, the carriage device **230** is prevented from tilting along with the tilting device **220.** Therein, the upper tilting rod **220a** and the lower tilting rod **220b** are disposed in a parallel and symmetrical arrangement. The longitudinal carriage rod **230a** and the transverse carriage rod **230b** are disposed in a perpendicularly intersecting arrangement.

Referring to **Fig. 1** to **Fig. 2****,** in the embodiment, the present application comprises one horizontal stabilization structure **100,** which is disposed on one side of the carriage device **230.** However, the number of the horizontal stabilization structure **100** is not limited to the number here. In another embodiment, two horizontal stabilization structures **100** are included and symmetrically disposed on two opposite sides of the tilting device **200.** Also, the two horizontal stabilization structures **100** are arranged on the same side with respect to the carriage device **230.** Therefore, when the user carries out the turning operation of the cargo bike **200,** the horizontal stabilization structures **100** more stably keep the carriage member **240** level.

The first connecting rod **10** comprises a first connecting end **11** and a second connecting end **12.** The first connecting end **11** is connected with the upper tilting rod **220a** of the tilting device **220.** The second connecting end **12** has a first combining part **121** and a second combining part **122** which protrudes toward a lateral side. The first combining part **121** is connected with the lower tilting rod **220b** of the tilting device **220.** Therein, when the tilting device **220** tilts leftward or rightward, the first connecting rod **10** sways with the first combining part **121** as the axis.

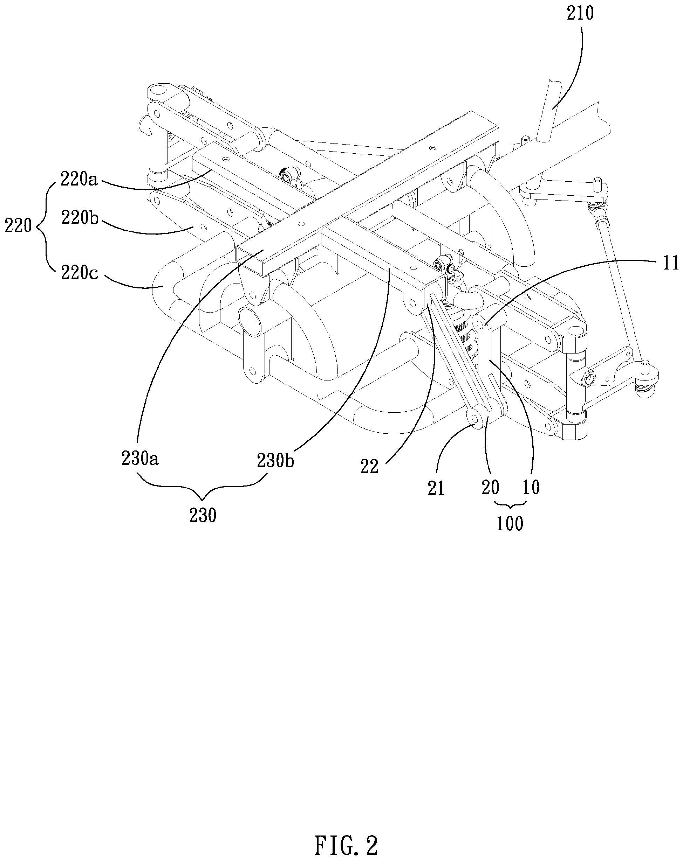

Referring to **Fig. 2** to **Fig. 5****,** in the embodiment, the first connecting end **11** comprises a first connecting hole **111,** and the upper tilting rod **220a** comprises a second connecting hole **220a1** corresponding to the first connecting hole **111,** with a first connecting member **30** passing through the first connecting hole **111** and the second connecting hole **220a1.** The first combining part **121** comprises a third connecting hole **121a,** and the lower tilting rod **220b** comprises a fourth connecting hole **220b1** corresponding to the third connecting hole **121a,** with a second connecting member **40** passing through the third connecting hole **121a** and the fourth connecting hole **220b1.** Therefore, the first connecting rod **10** is allowed to sway corresponding to the upper tilting rod **220a** and the lower tilting rod **220b.**

The second connecting rod **20** comprises a third connecting end **21** and a fourth connecting end **22.** The third connecting end **21** is connected with the second combining part **122.** The fourth connecting end **22** is connected with the carriage device **230.** Therein, the length of the second connecting rod **20** along the length direction is greater than the length of the first connecting rod **10** along the length direction. When the tilting device **220** tilts leftward or rightward, the second connecting rod **20** sways with the third connecting end **21** as the axis.

Referring to **Fig. 2** to **Fig. 5****,** in the embodiment, the second combining part **122** comprises a fifth connecting hole **122a,** and the third connecting end **21** comprises a sixth connecting hole **211** corresponding to the fifth connecting hole **122a,** with a third connecting member **50** passing through the fifth connecting hole **122a** and the sixth connecting hole **211.** The transverse carriage rod **230b** of the carriage device **230** comprises a seventh connecting hole **230b1,** and the fourth connecting end **22** comprises an eighth connecting hole **221** corresponding to the seventh connecting hole **230b1,** with a fourth connecting member **60** passing through the seventh connecting hole **230b1** and the eighth connecting hole **221,** such that the second connecting rod **20** pivots with respect to the transverse carriage rod **230b.** Therein, when the user controls the direction controlling device **210** to carry out the turning operation, the linkage relationship between the second connecting rod **20** and the first connecting rod **10** keeps the carriage member **240** level, thereby preventing the goods in the carriage member **240** from being damaged due to excessive shaking.

With the foregoing configuration, when the user operates the direction controlling device **210** to control the tilting device **220** to tilt, the horizontal stabilization structure **100** keeps the carriage device **230** level with respect to the ground, so as to prevent the goods in the carriage member **240** from being damaged due to excessive shaking or falling out of the carriage member **240.**

Further, when a child or a pet is in the carriage member **240,** the horizontal stabilization structure **100** keeps the carriage member **240** level with respect to the ground while the cargo bike **200** is moving, so as to ensure that the child or the pet sits more steadily in the carriage member **240,** reducing the possibility of motion sickness or potential danger.

Although particular embodiments of the application have been described in detail for purposes of illustration, various modifications and enhancements may be made without departing from the scope of the application. Accordingly, the application is not to be limited except as by the appended claims.

## Claims

1. A horizontal stabilization structure (100), which is applied to a cargo bike (200) having a direction controlling device (210), a tilting device (220), and a carriage device (230), the carriage device (230) being disposed in front of the direction controlling device (210) and connected with the tilting device (220), the horizontal stabilization structure (100) comprising:
a first connecting rod (10) having a first connecting end (11) and a second connecting end (12), the first connecting end (11) connected with an upper tilting rod (220a) of the tilting device (220), the second connecting end (12) comprising a first combining part (121) and a second combining part (122) protruding toward a lateral side, the first combining part (121) connected with a lower tilting rod (220b) of the tilting device (220); and
a second connecting rod (20) having a third connecting end (21) and a fourth connecting end (22), the third connecting end (21) connected with the second combining part (122), the fourth connecting end (22) connected with the carriage device (230);
wherein when the direction controlling device (210) controls the tilting device (220) to be in a tilting status, the horizontal stabilization structure (100) keeps the carriage device (230) level with respect to a ground.

2. The horizontal stabilization structure (100) of claim 1, wherein two horizonal stabilization structures (100) are included and symmetrically disposed on two opposite sides of the tilting device (220).

3. The horizontal stabilization structure (100) of claim 2, wherein the two horizontal stabilization structures (100) are disposed on the same side with respect to the carriage device (230).

4. The horizontal stabilization structure (100) of claim 1, wherein the first connecting end (11) has a first connecting hole (111), and the upper tilting rod (220a) has a second connecting hole (220a1) corresponding to the first connecting hole (111), with a first connecting member (30) passing through the first connecting hole (111) and the second connecting hole (220a1).

5. The horizontal stabilization structure (100) of claim 1, wherein the first combining part (121) has a third connecting hole (121a), and the lower tilting rod (220b) has a fourth connecting hole (220b1) corresponding to the third connecting hole (121a), with a second connecting member (40) passing through the third connecting hole (121a) and the fourth connecting hole (220b1).

6. The horizontal stabilization structure (100) of claim 1, wherein the second combining part (122) has a fifth connecting hole (122a), and the third connecting end (21) has a sixth connecting hole (211) corresponding to the fifth connecting hole (122a), with a third connecting member (50) passing through the fifth connecting hole (122a) and the sixth connecting hole (211).

7. The horizontal stabilization structure (100) of claim 1, wherein the carriage device (230) has a transverse carriage rod (230b), the transverse carriage rod (230b) has a seventh connecting hole (230bl), and the fourth connecting end (22) has an eighth connecting hole (221) corresponding to the seventh connecting hole (230b1), with a fourth connecting member (60) passing through the seventh connecting hole (230b1) and the eighth connecting hole (221).
